# EUROPEAN PATENT APPLICATION

(11) **EP 4 417 644 A1**
(43) Date of publication of application: **21.08.2024**
(21) Application number: 23157345.2
(22) Date of filing: 17.02.2023
(51) Int. Cl.: C08J 9/36, B32B 5/18, B32B 27/06, E04B 1/74, E04F 13/075

(54) **CLEANROOM SOUND ABSORBERS**

(71) Applicant: BASF SE, 67056 Ludwigshafen am Rhein (DE)
(72) Inventor: WEISSE, Sebastian Alexander, 67056 Ludwigshafen am Rhein (DE); STEINKE, Tobias Heinz, 67056 Ludwigshafen am Rhein (DE); RITTMANN, Erik, 67056 Ludwigshafen am Rhein (DE); VATH, Berhard, 67056 Ludwigshafen am Rhein (DE)
(74) Representative: BASF IP Association

(57) **Abstract**

A sound absorber comprising a melamine-formaldehyde foam as core A) and at least one polymer foil as cover layer B), a process for producing the sound absorber and its use in clean room applications.

## Description

The present invention relates to a sound absorber comprising a melamine-formaldehyde foam as core A) and at least one polymer foil as cover layer B), a process for producing the sound absorber and its use in clean room applications.

EP 1 498 680 A1 relates to a thermal storage unit with an open-cell foam based on a mela-mine/formaldehyde condensation product, which cell pores are filled with a flowable heat transfer medium, and with a casing made of a film made of polyolefin, which is suitable as a refrigerator accumulator.

EP 0 672 524 A1 and EP 0 922 563 A1 relate to dimensionally stable acoustic components, in which boards of an open-cell thermoset foam made from melamine-formaldehyde resin are laminated on both sides with thin, tear-resistant outer layers, with adhesives or by applying an aqueous binder suspension based on curable melamine, urea or phenolic resins to the surface of the foam boards, laying outer layers of from 0.05 to 1 mm metal foils or plastic films or from 0.1 to 3 mm fiber webs thereon, and pressing the composite.

WO 2008/135552 relates to a process for the coating of a foam molding with a plastics foil, which comprises a) arranging and securing the foam molding in a capsule, the plastics foil having been applied here between capsule wall and foam molding, b) evacuating the air in the chamber between plastics foil and foam molding, and c) thus pressing the plastics foil onto the foam molding and, during this pressing procedure, maintaining a vacuum below 30 mbar, and also to foam moldings which are obtainable for the first time by this process, and to the use of the foam moldings.

### Summary of the Invention

The present invention was made in view of the prior art described above, and the object of the present invention is to provide a sound absorber for clean room applications which has a good sound absorption in the low frequency range, does not release particles to the room and whose surface can be cleaned

### Technical problem solved

To solve the problem, the present invention provides a sound absorber comprising a mela-mine-formaldehyde foam as core A) and at least one polymer foil as cover layer B).

The core A) is a melamine-formaldehyde foam. The melamine resin foam has preferably an open-celled structure and an open-cell content measured according to DIN ISO 4590 of more than 50 %, preferable of 95 % or higher, most preferably of 98 to 100%.

Preferably the density of the melamine resin foam is in the range from 5 to 15 kg/m3, more preferably 6 to 12 kg/m3.

The melamine foam can be produced as described in WO 2009/021963. The melamine-resin foam according to the invention is preferably produced by a process comprising heating and foaming an aqueous mixture M using microwave radiation, said mixture M comprising at least one melamine-formaldehyde precondensate, at least one curative, at least one surfactant and at least one blowing agent. The melamine resin foam can be tempered at a temperature between 120 - 300°C.

The melamine/formaldehyde precondensates may be prepared separately or commercially available precondensates of the two components, melamine and formaldehyde may be used. Preferably a melamine-formaldehyde precondensate having a molar ratio of formaldehyde to melamine ranging from 5:1 to 1.3:1, more preferably from 3.5:1 to 1.5 to 1 is used. Preferably the number average molecular weight Mn ranges from 200 g/mol to 1000 g/mol. Preference is given to unmodified melamine/formaldehyde precondensates.

Anionic, cationic and nonionic surfactants and also mixtures thereof can be used as dispersant/emulsifier.

Useful anionic surfactants include for example diphenylene oxide sulfonates, alkane and alkylbenzenesulfonates, alkylnaphthalenesulfonates, olefinsulfonates, alkyl ether sulfonates, fatty alcohol sulfates, ether sulfates, α-sulfo fatty acid esters, acylaminoalkanesulfonates, acyl isethionates, alkyl ether carboxylates, N-acylsarcosinates, alkyl and alkylether phosphates. Useful nonionic surfactants include alkylphenol polyglycol ethers, fatty alcohol polyglycol ethers, fatty acid polyglycol ethers, fatty acid alkanolamides, ethylene oxidepropylene oxide block copolymers, amine oxides, glycerol fatty acid esters, sorbitan esters and alkylpolyglycosides. Useful cationic emulsifiers include for example alkyltriammonium salts, alkylbenzyldimethylammonium salts and alkylpyridinium salts.

The dispersants/emulsifiers can be added in amounts from 0.2% to 5% by weight, based on the melamine-formaldehyde precondensate.

Preferably the mixture M comprises a surfactant mixture comprising a mixture of 50 to 90 wt% of at least one anionic surfactant and 10 to 50 wt% of at least one nonionic surfactant, wherein the weight percentages are each based on the total weight of the surfactant mixture.

As curatives it is possible to use acidic compounds which catalyze the further condensation of the melamine resin. The amount of these curatives is generally in the range from 0.01% to 20% by weight and preferably in the range from 0.05% to 5% by weight, all based on the precondensate. Useful acidic compounds include organic and inorganic acids, for example selected from the group consisting of hydrochloric acid, sulfuric acid, phosphoric acid, nitric acid, formic acid, acetic acid, oxalic acid, toluene sulfonic acids, amido sulfonic acids, acid anhydrides and mixtures thereof. Preferably formic acid is used as curative.

The mixture further comprises at least one blowing agent. Useful physical blowing agents include for example hydrocarbons, such as pentane, hexane, halogenated, more particularly chlorinated and/or fluorinated, hydrocarbons, for example methylene chloride, chloroform, trichloroethane, chlorofluorocarbons, hydrochlorofluorocarbons (HCFCs), alcohols, for example methanol, ethanol, n propanol or isopropanol, ethers, ketones and esters, for example methyl formate, ethyl formate, methyl acetate or ethyl acetate, in liquid form or air, nitrogen or carbon dioxide as gas-es.

The amount of blowing agent in the mixture generally depends on the desired density for the foam. Preferably the amount in relation to the melamine-formaldehyde precondensate is chosen in an amount that the density of the foam is 5 to 15 kg/m3, more preferably 6 to 12 kg/m3. The blowing agent is preferably present in the mixture in an amount of 0.5% to 60% by weight, preferably 1% to 40% by weight and more preferably 1.5% to 30% by weight, based on the mela-mine-formaldehyde precondensate. It is preferable to add a physical blowing agent having a boiling point between 0 and 80°C. Most preferably pentane is used as blowing agent.

The precondensate being foamed up generally by heating the suspension of the melamine-formaldehyde precondensate to obtain a foamed material.

The introduction of energy may preferably be effectuated via electromagnetic radiation, for ex-ample via high-frequency radiation at 5 to 400 kW, preferably 5 to 200 kW and more preferably 9 to 120 kW per kilogram of the mixture used in a frequency range from 0.2 to 100 GHz, prefer-ably 0.5 to 10 GHz. Magnetrons are a useful source of dielectric radiation, and one magnetron can be used or two or more magnetrons at the same time.

The foamed materials produced can be finally dried, removing residual water and blowing agent from the foam. Drying is carried out preferably in a drying oven at a temperature in the range of 40 to 200°C, particularly preferably 100 to 150°C until a constant weight. The process described provides blocks or slabs of foamed material, which can be cut to size in any desired shapes.

The foamed material is preferably annealed in a temperature range from 120°C to 300°C, preferably 160°C to 280°C, most preferably 170°C to 270°C.

Preferably the core A) is a sheet with a thickness in the range from 10 to 200 mm.

The cover layer B) covers the core A) at least partially. Preferably core A) is surrounded by the cover layer B). The cover layer B) is preferably in direct contact with core A) without any adhesive layer.

Preferably the cover layer B) is a polymer foil, more preferably a thermoplastic polymer foil, such as polyolefin foil and most preferably a low-density polyethylene foil (LDPE).

Preferably the cover layer B) has a thickness in the range from 10 to 500 µm, more preferably in the range from 50 to 250 µm.

To improve sound absorbance and/or mechanical stability the edges and corners may be strengthened by a protective coating. The protective coating can be prepared by applying a film building binder, preferably a thermoset binder, such as epoxy-, polyester- or acrylate resins, to the edges and corners before attaching the cover layer B). Preferably a fire-protective coating is applied at least to the corners, preferably to all corners and edges corners of the core A).

A further subject of the invention is a process for producing a sound absorber described above by applying cover layers B) on at least one side of the core A). Preferably the cover layer B) is surrounding the core A) on all sides.

A preferred process comprises the steps of
a) providing a melamine-formaldehyde foam as core A),
b) optionally applying a fire-protective coating to at least the edges of the core A),
c) covering the core A) with a polymer foil as cover layer B),
d) welding of the cover layer B).

The welding in step d) can be carried out with hot air or with a hot wire (foil welding).

The sound absorber according to the invention is preferably used in clean room applications.

### Examples

Hereinafter, the present invention is described in more detail and specifically with reference to the Examples, which however are not intended to limit the present invention.

### Raw Materials:

- MF-foam LDPE foil: Basotect ^{®}, open-celled melamine-formaldehyde foam Clear LDPE100µ from HQ Pack, low density polyethylene (LDPE) foil with thickness of 100 µm
- protection coating:: HENSOTHERM 2KS INNEN, colorless liquid, density 1.3-1.4 g/ml at 20°C, water-based melamine containing intumescent coating

### Example 1: Preparation of a Clean room absorber (AB)

The absorber system consists of a Basotect^{®} core in 40, 80 or 120 mm thickness, plates with the lateral dimensions 600mm x 600mm and 1200mm x 600mm were produced. The edges are coated with Hensotherm 2KS. This is a fire protection paint that hardens on the foam and thus stabilizes the edge after the film covering. Without the edge reinforcement, the foam core at the edges is compressed by the tension of the film and no sharp edges are formed. The foam plates are then wrapped in 100µm thick LDPE film and welded with a hot air blower or by foil welding. It must be ensured that the film lies with sufficient tension on the foam core. The film is processed and packaged by the manufacturer under clean room conditions according to ISO 14644-1 and is therefore suitable for clean rooms. The film allows the use of the porous Basotect^{®} in clean rooms, which would otherwise not be possible due to the potential introduction of Basotect^{®} particles into the cleanroom and the possible accumulation of particles in the foam pores.

The absorbers were arranged in a 3,6m x 3,6m frame in a configuration of 4 rows x 6 boards to conduct acoustic measurements according to DIN EN ISO 354

### Example 2: Arrangement of alternating clean room absorbers (AB) and Basotect^{®} board (A) without a film covering

The absorbers were arranged in a 3,6m x 3,6m frame in a configuration of 4 rows x 6 boards to conduct acoustic measurements according to DIN EN ISO 354. An alternating lateral pattern of clean room absorbers "AB" (s. Example 1) and uncovered Basotect^{®} boards "A" (s. comparative example C1) in a checkerboard style was applied.

### Comparative Example C1:

Basotect^{®} board (A) without a film covering is used as comparative Example C1

### Acoustic measurements

Sound absorption coefficient was measured according to ISO 354:2003 in the reverberation room of both Basotect^{®} board ("A") and clean room absorber ("AB") as well as alternating (AB) and (A). Sound absorption coefficient α_{w} and absorption class were determined according to ISO 11654.This shows that the foiled panels show better sound absorption in low frequency ranges than untreated Basotect, whereas the opposite is true for high frequency ranges. If foiled and untreated panels are used alternately, the sound absorption in the range of low frequencies improves compared to untreated Basotect and the dip at the high frequencies is significantly lower than with the fully foiled sample set.

The acoustic effects are most likely resonance and edge effects, which is why the formation of clean edges and sufficient tension of the film are relevant. Furthermore, the thickness of the film is relevant, if it is too thick, the acoustic advantages of Basotect^{®} are lost, since a sonically reflective surface is generated.

**Table 1:**

| Example | | 1 | 2 | C1 |
|---|---|---|---|---|
| | | | | |
| Thickness core [mm] | | 80 | 80 | 80 |
| LDPE-foil [µm] | | 100 | 100 | 0 |
| Configuration | | only "AB" | alternating "AB" and "A" in checkerboard pattern | only "A" |
| % of boards with foil | | 100 | 50 | 0 |
| αₛ at 100 Hz | | 0,23 | 0,21 | 0,18 |
| a_{w} | | 0,55 | 0,9 | 1,00 |
| Absorption class | | D | A | A |

## Claims

1. Sound absorber comprising a melamine-formaldehyde foam as core A) and at least one polymer foil as cover layer B).

2. Sound absorber according to claim 1, wherein the core A) is an open-celled mela-mine-formaldehyde foam with a density in the range from 5 to 15 kg/m³.

3. Sound absorber according to claim 1 or 2, wherein the core A) is a sheet with a thickness in the range from 10 to 200 mm.

4. Sound absorber according to any of claims 1 to 3, wherein the cover layer B) is a low-density polyethylene foil.

5. Sound absorber according to any of claims 1 to 4, wherein the core A) is surrounded by the cover layer B).

6. Sound absorber according to any of claims 1 to 5, wherein the cover layer B) has a thickness in the range from 10 to 500 µm.

7. Sound absorber according to any of claims 1 or 6, wherein a protective coating is applied to the edges and corners of the core A).

8. A process for producing a sound absorber according to any of claims 1 to 7, comprising the steps of
a) providing a melamine-formaldehyde foam as core A),
b) optionally applying a protective coating to at least the edges of the core A),
c) covering the core A) with a polymer foil as cover layer B),
d) welding of the cover layer B).

9. Use of the sound absorber according to any of claims 1 to 7 in clean room applications.
